# EUROPÄISCHE PATENTSCHRIFT

(11) **EP 0 896 889 B1**
(45) Veröffentlichungstag und Bekanntmachung des Hinweises auf die Patenterteilung: **09.04.2003**
(21) Anmeldenummer: 98112185.8
(22) Anmeldetag: 01.07.1998
(51) Int. Cl.: B60H 1/00

(54) **Verfahren und Klimatisierungsvorrichtung zur Regelung des Klimas eines Innenraums insbesondere eines Fahrzeugs**
Air conditioning process and device to control the air conditioning in the interior of, in particular, a vehicle.
Procédé et dispositif de conditionnement d'air pour contrôler la climatisation dans l'habitacle en particulier d'un véhicule

(30) Priorität: 10.08.1997 DE 19734419
(43) Veröffentlichungstag der Anmeldung: 17.02.1999
(73) Patentinhaber: Behr GmbH & Co., 70469 Stuttgart (DE)
(72) Erfinder: Baruschke, Wilhelm, 73117 Wangen (DE); Lochmahr, Karl, 71665 Vaihingen/Enz (DE)
(74) Vertreter: Dreiss, Fuhlendorf, Steimle & Becker

(56) Entgegenhaltungen:
- DE-A- 2 952 210
- DE-A- 4 214 686
- US-A- 4 132 086
- US-A- 4 783 970
- PATENT ABSTRACTS OF JAPAN vol. 008, no. 164 (M-313), 28. Juli 1984 (1984-07-28) & JP 59 059517 A (MATSUSHITA DENKI SANGYO KK), 5. April 1984 (1984-04-05)
- PATENT ABSTRACTS OF JAPAN vol. 005, no. 083 (M-071), 30. Mai 1981 (1981-05-30) & JP 56 031811 A (DIESEL KIKI CO LTD), 31. März 1981 (1981-03-31)

## Beschreibung

Die Erfindung betrifft ein Verfahren zur Regelung des Klimas eines Innenraums insbesondere eines Fahrzeugs, wobei eine Klimatisierungsvorrichtung mit einem Verdampfer und mit einer Heizung versehen ist sowie mit einem Stellglied zur Beeinflussung derselben, bei dem ein Sollwert für eine Innenraumtemperatur vorgegeben wird, bei dem ein Istwert der Innenraumtemperatur gemessen wird, und bei dem von einem Innenraumtemperaturregler in Abhängigkeit von dem Sollwert und dem Istwert eine das Stellglied beeinflussende Stellgröße ermittelt wird.

Des Weiteren betrifft die Erfindung eine Klimatisierungsvorrichtung insbesondere eines Fahrzeugs mit einem Verdampfer und mit einer Heizung sowie mit einem Stellglied zur Beeinflussung derselben und mit einem Innenraumtemperaturregler zur Ermittlung einer das Stellglied beeinflussenden Stellgröße in Abhängigkeit von einem vorgebbaren Sollwert für eine Innenraumtemperatur und einem messbaren Istwert für die Innenraumtemperatur.

Ein derartiges Verfahren bzw. eine derartige Klimatisierungsvorrichtung ist aus der deutschen Offenlegungsschrift DE 42 14 686 A1 bekannt. Dort findet ein Soll-Istwert Vergleich mit einer nachfolgenden Regelung der Innenraumtemperatur statt. Die resultierende Stellgröße stellt ein Soll-Signal für einen nachfolgenden Ausblastemperaturregler dar, dem des Weiteren als Ist-Signal eine gemessene Ausblastemperatur zugeführt ist. Das von dem Ausblastemperaturregler erzeugte Ausgangssignal wird mit einem Vorsteuersignal verknüpft, um danach das Stellglied der Klimatisierungsvorrichtung zu beeinflussen. Das Vorsteuersignal wird aus Parametern der Klimatisierungsvorrichtung ermittelt und dient der Berücksichtigung von Störgrößen, die auf die Klimatisierungsvorrichtung einwirken.

Weiterer Stand der Technik ist aus der US-A-4,132,086 bekannt.

Aufgabe der Erfindung ist es, ein Verfahren bzw. eine Klimatisierungsvorrichtung der eingangs genannten Art im Hinblick auf eine genauere Berücksichtigung der Störgrößen zu verbessern.

Diese Aufgabe wird bei einem Verfahren bzw. bei einer Klimatisierungsvorrichtung der eingangs genannten Art erfindungsgemäß dadurch gelöst, dass die Stellgröße mit einer von der Innenraumtemperatur, einer Außentemperatur und einer Verdampfertemperatur des Verdampfers abhängigen Steuergröße additiv verknüpft wird.

Es wird also nicht erst wie bei dem beschriebenen Stand der Technik das Ausgangssignal einer Ausblastemperaturregelung mit einem Vorsteuersignal verknüpft, sondern es wird erfindungsgemäß bereits die Stellgröße der Innenraumtemperaturregelung mit den Störgrößen beaufschlagt. Es hat sich herausgestellt, dass auf diese Weise die Genauigkeit der Berücksichtigung der Störgrößen wesentlich verbessert wird.

Insbesondere wird durch die Verknüpfung der von der Innenraumtemperaturregelung erzeugten Stellgröße mit einer von der Klimatisierungsvorrichtung abhängigen Steuergröße erreicht, dass ein Ein- oder Ausschalten der Klimatisierungsvorrichtung nahezu keine Auswirkung auf die Innenraumtemperatur hat. Zumeist ist nur ein geringfügiges Nachregeln der Innenraumtemperatur durch die Innenraumtemperaturregelung erforderlich, nachdem die Klimatisierungsvorrichtung ein- oder ausgeschaltet worden ist.

Des Weiteren hat sich gezeigt, dass durch die frühzeitige Aufschaltung der Störgrößen auf die Stellgröße der Innenraumtemperaturregelung das dynamische Verhalten des Gesamtsystems wesentlich verbessert wird. Insbesondere kann mit dem erfindungsgemäßen Verfahren bzw. mit der erfindungsgemäßen Klimatisierungsvorrichtung wesentlich spontaner auf Veränderungen der Innenraumtemperatur reagiert werden.

Aufgrund der Abhängigkeit der Steuergröße von der Verdampfertemperatur des Verdampfers ist es möglich, Störgrößen, die aus der Verdampfertemperatur resultieren, bei dem erfindungsgemäßen Verfahren zu berücksichtigen und zu kompensieren.

Bei einer vorteilhaften Ausgestaltung der Erfindung ist bei einem Umluftbetrieb die Steuergröße abhängig von der Differenz der Innenraumtemperatur und der Verdampfertemperatur. Im Umluftbetrieb der Klimatisierungsvorrichtung wird keine Frischluft von außen in den Innenraum des Fahrzeugs geführt. Stattdessen wird die Luft im Innenraum umgewälzt.

Bei einer anderen vorteilhaften Ausgestaltung der Erfindung ist bei einem Frischluftbetrieb die Steuergröße abhängig von der Differenz einer Außentemperatur und der Verdampfertemperatur. Im Frischluftbetrieb wird Frischluft von außen in den Innenraum des Fahrzeugs zugeführt. In diesem Fall ist die Differenz zwischen Außentemperatur der Frischluft und der Verdampfertemperatur von Bedeutung und beeinflusst dann die Stellgröße der Innenraumtemperaturregelung.

Besonders zweckmäßig ist es, wenn zwischen der Steuergröße und der Differenz ein linearer Zusammenhang besteht. Es versteht sich jedoch, dass auch andere Zusammenhänge zwischen den genannten Größen vorhanden sein können.

Bei einer vorteilhaften Weiterbildung der Erfindung wird die Stellgröße zusammen mit der Steuergröße vor der Beeinflussung des Stellglieds einem Austrittstemperaturregelkreis zugeführt. Erfindungsgemäß werden also die Störgrößen vor dem Austrittstemperaturregelkreis auf die Stellgröße der Innenraumtemperaturregelung aufgeschaltet. Wie bereits erwähnt wurde, hat sich dies insbesondere im Hinblick auf die Dynamik der gesamten Klimatisierungsvorrichtung als besonders zweckmäßig herausgestellt.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung oder Darstellung in der Beschreibung bzw. in der Zeichnung.
- Figur 1: zeigt ein schematisches Blockschaltbild eines Ausführungsbeispiels eines erfindungsgemäßen Verfahrens zur Regelung des Klimas eines Innenraums eines Fahrzeugs, und
- Figuren 2 a und 2 b: zeigen zwei Diagramme zur Bildung einer Steuergröße für das Verfahren der Figur 1.

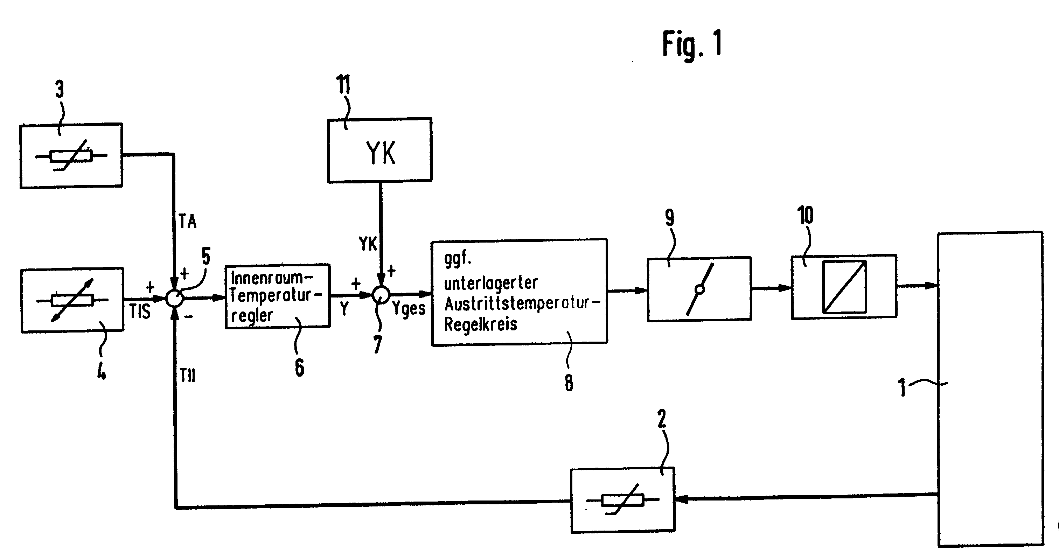

In der Figur 1 ist ein Innenraum 1 eines Fahrzeugs, insbesondere eines Personenkraftfahrzeugs dargestellt, dem ein Temperatursensor 2 zur Messung einer Innenraumtemperatur TII des Innenraums 1 zugeordnet ist. Des Weiteren ist ein Temperatursensor 3 dargestellt, der zur Messung einer Außentemperatur TA außerhalb des Innenraums 1 vorgesehen ist. Bei den Temperatursensoren 2, 3 kann es sich beispielsweise um ohmsche Widerstände handeln, deren Widerstandswert sich in Abhängigkeit von der Umgebungstemperatur verändert.

Des Weiteren ist eine Eingabevorrichtung 4 vorgesehen, mit der ein Benutzer eine erwünschte Innenraumtemperatur TIS in dem Innenraum 1 vorgeben kann. Bei der Eingabevorrichtung 4 kann es sich beispielsweise um einen in der Art eines Potentiometers veränderbaren ohmschen Widerstand handeln.

Bei der von dem Temperatursensor 2 gemessenen Innenraumtemperatur TII handelt es sich um den Istwert der Innenraumtemperatur. Bei der von der Eingabevorrichtung 4 vorgegebenen Innenraumtemperatur TIS handelt es sich um den Sollwert der Innenraumtemperatur.

Der Istwert der Innenraumtemperatur TII, der Sollwert der Innenraumtemperatur TIS und die Außentemperaturaufschaltung TA sind einer Verknüpfungsvorrichtung 5 zugeführt, von der die genannten Signale miteinander verknüpft werden. Der Sollwert der Innenraumtemperatur TIS und die Außenraumtemperaturaufschaltung TA werden dabei additiv berücksichtigt, während der Istwert der Innenraumtemperatur TII als Negativwert hinzugefügt wird.

Das von der Verknüpfungsvorrichtung 5 erzeugte Signal wird einem Innenraumtemperaturregler 6 zugeführt. Bei diesem Regler kann es sich um jegliche bekannte Regeleinrichtung handeln, beispielsweise um einen P-Regler.

Am Ausgang des Innenraumtemperaturreglers 6 steht eine Stellgröße Y zur Verfügung. Diese Stellgröße wird mittels einer Verknüpfungsvorrichtung 7 mit einer Steuergröße YK verknüpft. Die Stellgröße Y und die Steuergröße YK werden dabei additiv berücksichtigt. Als Ergebnis erzeugt die Verknüpfungsvorrichtung 7 ein Signal Yges.

Das Signal Yges kann einem nachfolgenden unterlagerten Austrittstemperaturregelkreis 8 zugeführt werden. Dieser Austrittstemperaturregelkreis 8 ist jedoch nicht zwingend erforderlich, sondern nur optional.

Das Ausgangssignal des Austrittstemperaturregelkreises 8 oder - wenn der Austrittstemperaturregelkreis 8 nicht vorhanden ist - das Signal Yges wird einem Stellglied 9 einer Klimatisierungsvorrichtung zugeführt. Beim Stellglied 9 handelt es sich bei einer luftseitig geregelten Anlage um eine Temperaturmischklappe, bei einer wasserseitig geregelten Anlage um ein Wasserventil eines Heizkörpers 10.

Die genannte Änderung der Wirkungsweise des Bauteils 10 aufgrund einer Verstellung des Stellglieds 9 hat wiederum eine Veränderung der Innenraumtemperatur im Innenraum 1 zur Folge. Damit ist der gesamte Regelkreis der Figur 1 geschlossen.

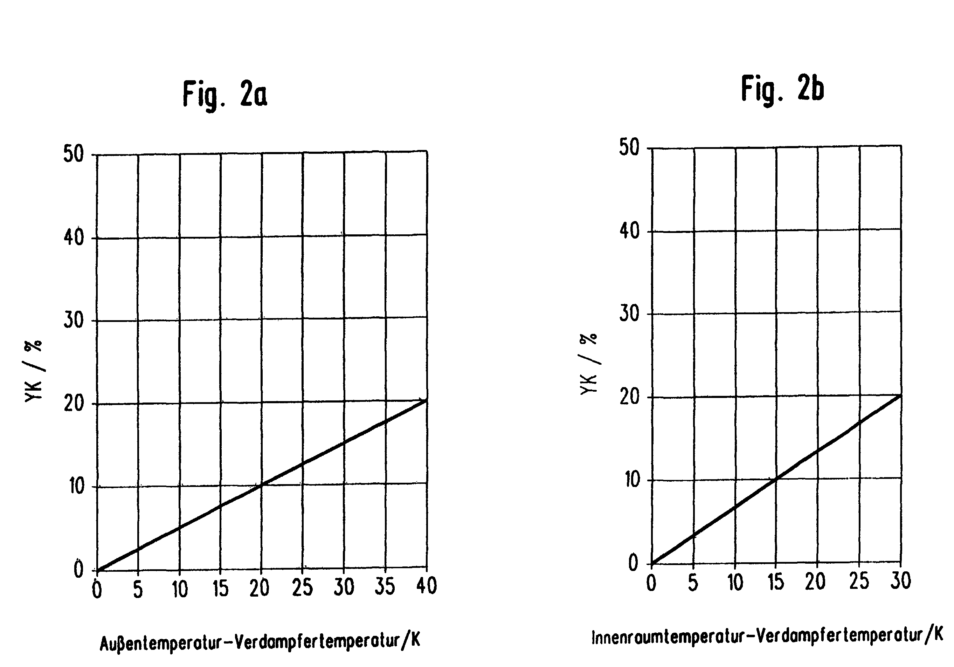

Die Steuergröße YK wird von einem Block 11 erzeugt. Zu diesem Zweck sind in dem Block 11 die Diagramme der Figuren 2 a und 2 b abgespeichert. Das Diagramm der Figur 2 a bezieht sich auf einen Frischluftbetrieb der Klimatisierungsvorrichtung, während das Diagramm der Figur 2 b einem Umluftbetrieb der Klimatisierungsvorrichtung zugeordnet ist.

Im Frischluftbetrieb der Klimatisierungsvorrichtung, also wenn Frischluft von außen in den Innnenraum 1 zugeführt wird, wird gemäß der Figur 2 a die Differenz gebildet aus der Außentemperatur TA und einer Verdampfertemperatur. Bei der Verdampfertemperatur handelt es sich um die Betriebstemperatur des Verdampfers der Klimatisierungsvorrichtung. Aus der ermittelten Differenz wird die Steuergröße YK erzeugt, Figur 2a ist als Beispiel anzusehen.

Die Steuergröße YK wird dann, wie ebenfalls bereits erläutert, der Verknüpfungsvorrichtung 7 aufgeschaltet.

Im Umluftbetrieb der Klimatisierungsvorrichtung, also wenn keine Frischluft von außen in den Innenraum 1 gelangt, sondern die Luft im Innenraum 1 nur umgewälzt wird, wird gemäß der Figur 2 b die Differenz aus der Innenraumtemperatur TII und der Verdampfertemperatur gebildet. Aus dieser Differenz wird bei Umluftbetrieb die Steuergröße YK gebildet (vgl. Figur 2b).

Befindet sich die Klimatisierungsvorrichtung im Umluftbetrieb, so wird die Steuergröße YK auf die beschriebene Weise gemäß der Figur 2 b ermittelt und dann auf die Verknüpfungsvorrichtung 7 aufgeschaltet.

Das vorstehend anhand der Figuren 1, 2 a und 2 b beschriebene Verfahren wird mit Hilfe eines Steuergeräts realisiert. Dabei kann das Steuergerät insbesondere einen progammierbaren Mikroprozessor oder dergleichen enthalten, mit dem der Innenraumtemperaturregler 6, die Verknüpfungsvorrichtungen 5 und 7 der Austrittstemperaturregler 8 und insbesondere der Block 11 zur Bildung der Steuergröße YK ausgeführt werden kann. Des Weiteren kann das Steuergerät mit einem Speicher oder dergleichen versehen sein, in dem die Diagramme der Figuren 2 a und 2 b abgespeichert sind.

## Patentansprüche

1. Verfahren zur Regelung des Klimas eines Innenraums (1) insbesondere eines Fahrzeugs, wobei eine Klimatisierungsvorrichtung mit einem Verdampfer und mit einer Heizung (10) versehen ist sowie mit einem Stellglied (9) zur Beeinflussung derselben, bei dem ein Sollwert (TIS) für eine Innenraumtemperatur vorgegeben wird, bei dem ein Istwert (TII) der Innenraumtemperatur gemessen wird, und bei dem von einem Innenraumtemperaturregler (6) in Abhängigkeit von dem Sollwert (TIS) und dem Istwert (TII) eine das Stellglied (9) beeinflussende Stellgröße (Y) ermittelt wird, **dadurch gekennzeichnet, daß** die Stellgröße (Y) mit einer von der Innenraumtemperatur, einer Außentemperatur und einer Verdampfertemperatur des Verdampfers abhängigen Steuergröße (YK) additiv verknüpft wird.

2. Verfahren nach Anspruch 1, **dadurch gekennzeichnet, daß** bei einem Umluftbetrieb die Steuergröße (YK) abhängig ist von der Differenz der Innenraumtemperatur und der Verdampfertemperatur.

3. Verfahren nach Anspruch 1, **dadurch gekennzeichnet, daß** bei einem Frischluftbetrieb die Steuergröße (YK) abhängig ist von der Differenz der Außentemperatur (TA) und der Verdampfertemperatur.

4. Verfahren nach einem der Ansprüche 2 oder 3, **dadurch gekennzeichnet, daß** zwischen der Steuergröße (YK) und der Differenz ein linearer Zusammenhang besteht.

5. Verfahren nach einem der vorstehenden Ansprüche, **dadurch gekennzeichnet, daß** die Stellgröße (Y) zusammen mit der Steuergröße (YK) vor der Beeinflussung des Stellglieds (9) einem Austrittstemperaturregelkreis (8) zugeführt wird.

6. Klimatisierungsvorrichtung insbesondere eines Fahrzeugs, mit einem Verdampfer und mit einer Heizung (10) sowie mit einem Stellglied (9) zur Beeinflussung derselben, und mit einem Innenraumtemperaturregler (6) zur Ermittlung einer das Stellglied (9) beeinflussenden Stellgröße (Y) in Abhängigkeit von einem vorgebbaren Sollwert (TIS) für eine Innenraumtemperatur und einem meßbaren Istwert (TII) für die Innenraumtemperatur, **dadurch gekennzeichnet, daß** die Stellgröße (Y) durch das Steuergerät mit einer von der Innenraumtemperatur, einer Außentemperatur und einer Verdampfertemperatur des Verdampfers abhängigen Steuergröße (YK) additiv verknüpft wird.

7. Klimatisierungsvorrichtung nach Anspruch 6, **dadurch gekennzeichnet, daß** bei einem Umluftbetrieb die Steuergröße (YK) abhängig ist von der Differenz der Innenraumtemperatur und der Verdampfertemperatur.

8. Klimatisierungsvorrichtung nach Anspruch 6, **dadurch gekennzeichnet, daß** bei einem Frischluftbetrieb die Steuergröße (YK) abhängig ist von der Differenz der Außentemperatur (TA) und der Verdampfertemperatur.

9. Klimatisierungsvorrichtung nach einem der Ansprüche 7 oder 8, **dadurch gekennzeichnet, daß** zwischen der Steuergröße (YK) und der Differenz ein linearer Zusammenhang besteht.

## Claims

1. Method for the air conditioning of an interior space (1), particularly that of a vehicle, where an air conditioning device is provided with an evaporator and with a heating element (10), as well as with a servo actuator (9) for influencing same, where a required value setpoint (TIS) is pre-specified for an interior space temperature, where an actual value (TII) of the internal space temperature is measured, and where an actuating variable (Y) influencing the servo actuator (9) is determined by an interior space temperature controller (6) as a function of the required value setpoint (TIS) and the actual value (TII), **wherein** the actuating variable (Y) is additively linked with a control variable (YK) dependent on the internal space temperature, an ambient temperature and an evaporator temperature of the evaporator.

2. Method according to Claim 1, **wherein**, where circulating air operation is involved, the control variable (YK) is dependent on the difference between the internal space temperature and the evaporator temperature.

3. Method according to Claim 1, **wherein**, where a fresh air operation is involved, the control variable (YK) is dependent on the difference between the ambient temperature (TA) and the evaporator temperature.

4. Method according to one of the Claims 2 or 3, **wherein** a linear correlation exists between the control variable (YK) and the difference.

5. Method according to one of the previous Claims, **wherein** the actuating variable (Y) together with the control variable (YK) is transmitted to an outlet temperature control circuit (8) before the influencing of the servo actuator (9).

6. Air conditioning device, particularly that of a vehicle, with an evaporator and with a heating element (10) as well as with a servo actuator (9) for influencing same, and with an internal space temperature controller (6) for determining an actuating variable (Y), influencing the servo actuator (9), in dependence of a pre-specifiable required value setpoint (TIS) for an internal space temperature and a measurable actual value (TII) for the internal space temperature, **wherein** the actuating variable (Y) is additively linked, by means of the control unit, with control variable (YK) dependent on the internal space temperature, an ambient temperature and an evaporator temperature of the evaporator.

7. Air condition device according to Claim 6, **wherein**, where circulating air operation is involved, the control variable (YK) is dependent on the difference between the internal space temperature and the evaporator temperature.

8. Air conditioning device according to Claim 6, **wherein**, where a fresh air operation is involved, the control variable (YK) is dependent on the difference between the ambient temperature (TA) and the evaporator temperature.

9. Air conditioning device according to one of the Claims 7 or 8, **wherein** a linear correlation exists between the control variable (YK) and the difference.

## Revendications

1. Procédé de régulation de la climatisation d'un habitacle (1), en particulier d'un véhicule automobile, où un dispositif de conditionnement d'air est doté d'un évaporateur et d'un chauffage (10) ainsi que d'un élément de réglage (9) pour influencer ce même dispositif de conditionnement d'air, procédé au cours duquel est préréglée une valeur théorique (TIS) pour une température de l'habitacle, procédé au cours duquel est mesurée une valeur réelle (TII) de la température de l'habitacle et au cours duquel une variable de réglage (Y), influençant l'élément de réglage, est calculée par un régulateur de température (6) de l'habitacle, en fonction de la valeur théorique (TIS) et de la valeur réelle (TII), **caractérisé en ce que** la variable de réglage (Y) est combinée de façon additive à une variable de commande (YK) dépendant de la température de l'habitacle, d'une température extérieure et d'une température de l'évaporateur.

2. Procédé selon la revendication 1, **caractérisé en ce que**, lorsque l'on fait fonctionner l'air de reprise, la variable de commande (YK) est dépendante de la différence existant entre la température de l'habitacle et la température de l'évaporateur.

3. Procédé selon la revendication 1, **caractérisé en ce que**, lorsque l'on fait fonctionner l'air frais, la variable de commande (YK) est dépendante de la différence existant entre la température extérieure (TA) et la température de l'évaporateur.

4. Procédé selon la revendication 2 ou 3, **caractérisé en ce qu'**il existe une relation linéaire entre la variable de commande (YK) et la différence de température.

5. Procédé selon l'une quelconque des revendications précédentes, **caractérisé en ce que** la variable de réglage (Y), en même temps que la variable de commande (YK), est fournie à un circuit de régulation (8) de la température extérieure, avant que l'élément de réglage (9) exerce son influence.

6. Dispositif de conditionnement d'air, en particulier d'un véhicule automobile, comprenant un évaporateur et un chauffage (10), ainsi qu'un élément de réglage (9) pour influencer ce même dispositif de climatisation, et comprenant un régulateur de température (6) de l'habitacle pour calculer une variable de réglage (Y) influençant l'élément de réglage (9), en fonction d'une valeur théorique (TIS) pouvant être préréglée, pour une température de l'habitacle, et en fonction d'une valeur réelle (TII) mesurable, pour la température de l'habitacle, **caractérisé en ce que** la variable de réglage (Y) est combinée de façon additive, par l'organe de commande, à une variable de commande (YK) dépendant de la température de l'habitacle, d'une température extérieure et d'une température de l'évaporateur.

7. Dispositif de conditionnement d'air selon la revendication 6, **caractérisé en ce que**, lorsque l'on fait fonctionner l'air de reprise, la variable de commande (YK) est dépendante de la différence existant entre la température de l'habitacle et la température de l'évaporateur.

8. Dispositif de conditionnement d'air selon la revendication 6, **caractérisé en ce que**, lorsque l'on fait fonctionner l'air frais, la variable de commande (YK) est dépendante de la différence existant entre la température extérieure (TA) et la température de l'évaporateur.

9. Dispositif de conditionnement d'air selon la revendication 7 ou 8, **caractérisé en ce qu'**il existe une relation linéaire entre la variable de commande (YK) et la différence de température.
